# EUROPEAN PATENT APPLICATION

(11) **EP 4 834 833 A1**
(43) Date of publication of application: **04.11.2026**
(21) Application number: 24913620.1
(22) Date of filing: 18.12.2024
(51) Int. Cl.: C01B 32/05, C01B 33/113, C01B 32/33, C01B 32/36, C01B 33/12, H01M 4/38, H01M 4/36, H01M 4/587, H01M 4/02

(54) **CARBON-SILICON/CARBON COMPOSITE AND METHOD FOR PRODUCING SAME**

(30) Priority: 29.12.2023 KR 20230197033
(71) Applicant: Hanwha Solutions Corporation, Jung-gu Seoul 04541 (KR); Pukyong National University Industry - University Cooperation Foundation, Nam-gu Busan, 48513 (KR)
(72) Inventor: KIM, Do Heung, Seoul 04541 (KR); JEON, Hyo Jin, Seoul 04541 (KR); CHAE, Sujong, Busan 48076 (KR); LEE, Jinsoo, Busan 47051 (KR); PARK, Seongsu, Changwon-si, Gyeongsangnam-do 51793 (KR); YOON, Kichan, Seoul 04541 (KR); KO, Minsung, Busan 48099 (KR)
(74) Representative: Berggren Oy
(86) International application number: PCT/KR2024/020556
(87) International publication number: WO 2025/143677

(57) **Abstract**

The present invention relates to: a carbon-silicon/carbon composite in which a silicon/carbon composite matrix is formed on the surface of and inside the pores of a porous carbon support having controlled pore properties; and a method for producing same. When the carbon-silicon/carbon composite according to an embodiment of the present invention is used as a negative electrode active material, the overall silicon size can be suppressed, and the formation of Crystal-LiₓSi_{y} (e.g., Li₁₅Si₄ or Li_{3.75}Si), which is an intermediate phase affecting battery performance degradation, can be suppressed to mitigate battery performance degradation during repeated charging and discharging.

## Description

### TECHNICAL FIELD

The present invention relates to a carbon-silicon/carbon composite, and more particularly, to a carbon-silicon/carbon composite and a method for producing the same.

### BACKGROUND

A carbon material refers to a material composed of carbon, which is one of the most abundant resources on Earth. Carbon materials are key materials that are widely used in fields such as hydrogen vehicles, aviation, secondary batteries, and high-end consumer goods, because carbon materials are very light, strong, and excellent in electrical conductivity and thermal conductivity.

Carbon materials may be produced from various raw materials such as coconut shells, polyacrylonitrile, rayon, and pitch. Among these, carbon materials produced from solid-state raw materials such as coconut shells are difficult to control in molecular weight and composition (Korean Patent Application Publication No. 10-2019-0093960).

In contrast, pitch, which is a viscoelastic solid polymer extracted from crude oil or plants, has advantages in that, when converted into a carbon material, pitch provides a high yield, the raw material is inexpensive, and the molecular structure thereof is closer to a graphite structure than those of other raw materials, thereby making it possible to reduce the energy required for heat treatment (U.S. Patent Nos. 4,242,196 and 4,340,464).

In particular, pyrolysis fuel oil (PFO), naphtha cracking bottom oil (NCB), vacuum residue (VR), and fluid catalytic cracking decant oil (FCC-DO), which are obtained as by-products in petroleum refining processes, have high contents of aromatic compounds and low contents of impurities such as sulfur and nitrogen, and thus pitch produced therefrom has attracted attention as a material for carbon materials.

Meanwhile, attempts have been made to use a silicon-based negative electrode active material in order to improve the capacity of secondary batteries. Silicon has an extremely high theoretical energy density and thus has attracted attention as a next-generation battery negative electrode active material capable of replacing graphite. However, silicon has a problem in that the volume thereof increases by up to about 300% during charging and discharging, so that the mechanical stability thereof is very poor because the silicon, which is the negative electrode active material, is fractured as charging and discharging proceed.

Accordingly, studies have been conducted to solve these problems, but conventional negative electrode active materials have had a problem in that fracture caused by volume expansion has not been sufficiently resolved.

### [Prior Art Documents]

### [Patent Documents]

(Patent Document 0001) Korean Patent Application Publication No. 10-2019-0093960
(Patent Document 0002) U.S. Patent No. 4,242,196
(Patent Document 0003) U.S. Patent No. 4,340,464

### DISCLOSURE

### TECHNICAL PROBLEM

The present invention is directed to providing a carbon-silicon/carbon composite in which a silicon/carbon composite matrix is formed inside the pores and/or on the surface of a porous carbon support having controlled pore properties.

The present invention is also directed to providing a method for producing the carbon-silicon/carbon composite.

The present invention is also directed to providing a negative electrode active material comprising the carbon-silicon/carbon composite.

### TECHNICAL SOLUTION

The present invention provides a carbon-silicon/carbon composite comprising: a porous carbon support having a mesopore volume ratio of 5 to 80%, based on a total pore volume, wherein the mesopores have a pore size of 2 to 50 nm; and a silicon/carbon composite matrix disposed on a surface of and inside pores of the porous carbon support.

According to one embodiment of the present invention, the porous carbon support may have a BET specific surface area of 300 to 3,000 m²/g, a tap density of 0.05 to 0.5 g/mL, and an average particle diameter of 1 to 20 µm.

In addition, a content of silicon may be 20 to 70 wt% based on a total weight of the carbon-silicon/carbon composite.

In addition, the silicon/carbon composite matrix may be present in an amount of 10 to 90 wt% based on a total weight of the carbon-silicon/carbon composite.

In addition, an average size of silicon crystals in the silicon/carbon composite matrix may be 10 nm or less.

In addition, the carbon-silicon/carbon composite may have a c/a peak ratio of 0 to 1.5.

In addition, the present invention provides a method for producing a carbon-silicon/carbon composite, the method comprising forming a silicon/carbon composite matrix on a surface of and inside pores of a porous carbon support to produce a carbon-silicon/carbon composite.

According to one embodiment of the present invention, the method may further include, before the producing of the carbon-silicon/carbon composite, (1) synthesizing pitch by pyrolyzing and polycondensing a petroleum-based raw material; (2) solidifying and pelletizing the pitch to obtain pelletized pitch, or solidifying, pelletizing, and pulverizing the pitch to obtain powdered pitch; (3) stabilizing the pelletized pitch or the powdered pitch; (4) carbonizing the stabilized pitch to obtain a carbonized product; and (5) activating the carbonized product to obtain the porous carbon support.

In addition, the silicon/carbon composite matrix may be formed by performing composite CVD of a silicon source and a carbon source on the porous carbon support.

In addition, a gas flow rate ratio of the silicon source to the carbon source may be 1:0.1 to 1:2.

In addition, the present invention provides a negative electrode active material including the above-described carbon-silicon/carbon composite.

In addition, the present invention provides an all-solid-state battery including an SEI (Solid Electrolyte Interphase) layer including the above-described carbon-silicon/carbon composite.

### ADVANTAGEOUS EFFECT

In the carbon-silicon/carbon composite according to an embodiment of the present invention, by forming a silicon/carbon composite matrix on the surface of and/or inside the pores of a porous carbon support having a high proportion of mesopores among the total pores, when the carbon-silicon/carbon composite is used as a negative electrode active material, the overall silicon size can be suppressed, and the formation of Crystal-LiₓSi_{y} (e.g., Li₁₅Si₄ or Li_{3.75}Si), which is an intermediate phase affecting battery performance degradation, can be suppressed, thereby mitigating battery performance degradation during repeated charging and discharging.

In addition, the production method according to an embodiment of the present invention can readily produce the carbon-silicon/carbon composite having the above characteristics.

### BRIEF DESCRIPTION OF THE DRAWINGS

FIG. 1 is an SEM image of the carbon-silicon/carbon composite (Example 1) according to one embodiment of the present invention.
FIG. 2 is a graph showing electrochemical evaluation results, namely, charge-discharge efficiency, ICE, and capacity retention, of Example 1, Example 2, and Comparative Example 1 of the present invention.
FIG. 3 is a graph showing dQ/dV measurement results of Example 1, Example 2, and Comparative Example 1 of the present invention.
FIG. 4 is an image showing XRD analysis results of the carbon-silicon/carbon composite (Example 1) according to one embodiment of the present invention.
FIG. 5 is an image showing XRD analysis results of Comparative Example and the carbon-silicon/carbon composite of Example 1 according to one embodiment of the present invention at different heat-treatment temperatures (Examples 1-1 to 1-3).

### BEST MODES FOR CARRYING OUT THE INVENTION

The present invention is not limited to the embodiments disclosed below, and may be modified in various forms as long as the spirit of the invention is not altered.

In the present specification, the terms "comprise" or "include" mean that other components may be further included unless otherwise specified.

Unless otherwise specified, all numerical values and expressions indicating the amounts of components, reaction conditions, and the like described in the present specification are to be understood as being modified by the term "about" in all instances.

Hereinafter, the present invention will be described in more detail.

### Carbon-Silicon/Carbon Composite

According to one embodiment of the present invention, there is provided a carbon-silicon/carbon composite including: a porous carbon support having a mesopore volume ratio of 5 to 80%, based on the total pore volume, wherein the mesopores have a pore size of 2 to 50 nm; and a silicon/carbon composite matrix disposed on the surface of and inside the pores of the porous carbon support.

Hereinafter, each component of the carbon-silicon/carbon composite according to one embodiment of the present invention will be described.

### Porous Carbon Support

The carbon-silicon/carbon composite according to an embodiment of the present invention includes a porous carbon support.

The porous carbon support may have a mesopore volume ratio of 5 to 80%, preferably 30 to 60%, and more preferably 40 to 50%, based on the total pore volume, wherein the mesopores have a pore size of 2 to 50 nm. If the volume ratio of mesopores in the porous carbon support is less than 5%, an excessively large number of micropores may cause the silicon/carbon composite matrix to be formed relatively extensively on the outside of particles, and if the volume ratio of mesopores in the porous carbon support exceeds 80%, the hardness of the particles may be insufficient, and thus, when an electrode is produced using the same, the structure of the electrode may collapse.

In addition, the porous carbon support may have a BET specific surface area of 300 to 3,000 m²/g. Preferably, the porous carbon support may have a BET specific surface area of 300 to 1,500 m²/g, more preferably 500 to 1,500 m²/g. If the BET specific surface area of the porous carbon support is less than 300 m²/g, an excessively large number of macropores may result in an insufficient number of effective pores, and if the BET specific surface area of the porous carbon support exceeds 3,000 m²/g, an excessively large number of micropores may cause the silicon/carbon composite matrix to be deposited relatively extensively on the outside of particles.

In addition, the porous carbon support may have a tap density of 0.05 to 0.5 g/mL. Preferably, the porous carbon support may have a tap density of 0.05 to 0.3 g/mL, more preferably 0.1 to 0.3 g/mL. If the tap density of the porous carbon support is less than 0.05 g/mL, process control during formation of the silicon/carbon composite matrix may be difficult, and thus the yield may decrease, and if the tap density of the porous carbon support exceeds 0.5 g/mL, it may be difficult to uniformly form the matrix during formation of the silicon/carbon composite matrix.

Further, the porous carbon support may have an average particle size of 1 to 20 µm. Preferably, the porous carbon support may have an average particle size of 3 to 20 µm, more preferably 3 to 10 µm. If the average particle size of the porous carbon support is less than 1 µm, the silicon/carbon composite matrix cannot sufficiently penetrate into the pores and is formed mostly only on the outside of the particles, and if the average particle size of the porous carbon support exceeds 20 µm, it is difficult for the silicon/carbon composite matrix to be sufficiently formed inside the pores.

Since the carbon-silicon/carbon composite according to an embodiment of the present invention includes the porous carbon support having the above characteristics, when the carbon-silicon/carbon composite is used as a negative electrode active material, the carbon-silicon/carbon composite has excellent electrical conductivity and can relieve stress caused by volume expansion of silicon.

### Silicon/Carbon Composite Matrix

The carbon-silicon/carbon composite according to an embodiment of the present invention includes a silicon/carbon composite matrix disposed on the surface of and inside the pores of the porous carbon support.

In the present invention, the silicon/carbon composite matrix may refer to a continuous phase (SiₓC_{y}) in which a silicon portion formed by Si-Si bonds and a silicon carbide portion formed by Si-C bonds coexist.

In a specific embodiment of the present invention, as described below, the carbon-silicon/carbon composite may be obtained by performing composite CVD of a silicon source and a carbon source on the porous carbon support.

In a specific embodiment of the present invention, the silicon/carbon composite matrix may include crystalline silicon particles. In this case, the size of the silicon crystals may be on the nanoscale. Specifically, the average size of the silicon crystals in the silicon/carbon composite matrix may be 10 nm or less. Preferably, the average size of the silicon crystals in the silicon/carbon composite matrix may be 8 nm or less, 5 nm or less, 3 nm or less, or 1 nm or less. When the average size of the silicon crystals in the silicon/carbon composite matrix satisfies the above range, the magnitude of stress caused by volume expansion of silicon is reduced, and thus the lifespan characteristics of the negative electrode active material may be improved. Meanwhile, the average particle diameter of the silicon crystals satisfying the above range may be attributable to the fact that Si-C bonds are more preferred than Si-Si bonds.

Meanwhile, as the carbon-silicon/carbon composite includes the silicon/carbon composite matrix, the silicon content may be 20 to 70 wt%, preferably 25 to 65 wt%, based on the total weight of the carbon-silicon/carbon composite. If the silicon content is less than 20 wt% based on the total weight of the carbon-silicon/carbon composite, electrical capacity may decrease, and if the silicon content exceeds 70 wt%, problems caused by volume expansion of silicon during charging and discharging cannot be resolved, thereby causing structural damage to the negative electrode material and deteriorating cycle characteristics.

In addition, the silicon/carbon composite matrix may be present in an amount of 10 to 90 wt%, preferably 15 to 85 wt%, based on the total weight of the carbon-silicon/carbon composite. If the silicon/carbon composite matrix is present in an amount of less than 10 wt% based on the total weight of the carbon-silicon/carbon composite, electrical capacity may decrease, and if the silicon/carbon composite matrix exceeds 90 wt%, problems caused by volume expansion of silicon during charging and discharging cannot be resolved, thereby causing structural damage to the negative electrode material and deteriorating cycle characteristics.

Meanwhile, the silicon may be crystalline or amorphous, preferably amorphous or a phase similar thereto. When the silicon is crystalline, the smaller the size of crystallites, the denser a composite that can be obtained, and thus the strength of the matrix can be enhanced to prevent cracking. Accordingly, the initial efficiency or cycle life characteristics of a secondary battery may be improved.

The silicon may further include a silicon oxide compound. The silicon oxide compound may be represented by General Formula SiOₓ (0.5≤x≤2). Here, when x is less than 0.5, expansion and contraction may increase during charging and discharging of a secondary battery, and lifespan characteristics may deteriorate. When x exceeds 2, inactive oxides increase, and thus the initial efficiency of the secondary battery may decrease.

The content of the silicon oxide compound in the silicon may be 50 wt% or less based on the total weight of the silicon. If the content of the silicon oxide compound in the silicon exceeds 50 wt%, the initial efficiency of the secondary battery may decrease.

Meanwhile, the carbon-silicon/carbon composite may have a c/a peak ratio of 0 to 1.5, preferably 0 to 1.3, more preferably 0 to 1.2, still more preferably 0 to 1.18, and even more preferably 0 to 1.15. When the c/a peak ratio of the carbon-silicon/carbon composite satisfies the above range, it may be more advantageous for achieving the object of the present invention, for example, by exhibiting an effect of maintaining stable electrochemical performance during life evaluation. In this case, the c/a peak ratio indicates a peak ratio between crystal (c) and amorphous (a).

### Method for Producing Carbon-Silicon/Carbon Composite

The carbon-silicon/carbon composite according to one embodiment of the present invention is produced by a production method including forming a silicon/carbon composite matrix on the surface of and inside the pores of a porous carbon support to produce a carbon-silicon/carbon composite.

Meanwhile, according to one embodiment of the present invention, before the step of producing the carbon-silicon/carbon composite, the production method may further include: (1) synthesizing pitch by pyrolyzing and polycondensing a petroleum-based raw material; (2) solidifying and pelletizing the pitch to obtain pelletized pitch, or solidifying, pelletizing, and pulverizing the pitch to obtain powdered pitch; (3) stabilizing the pelletized pitch or the powdered pitch; (4) carbonizing the stabilized pitch to obtain a carbonized product; and (5) activating the carbonized product to obtain a porous carbon support.

Hereinafter, each step of the method for producing the carbon-silicon/carbon composite according to one embodiment of the present invention will be described.

### Step (1)

In step (1), pitch may be synthesized by pyrolyzing and polycondensing a petroleum-based raw material.

In a specific embodiment of the present invention, the petroleum-based raw material may include at least one selected from the group consisting of pyrolysis fuel oil (PFO), naphtha cracking bottom oil (NCB), ethylene cracker bottom oil (EBO), vacuum residue (VR), de-asphalted oil (DAO), atmospheric residue (AR), RFCC-DO, residue fluid catalytic cracking decant oil (RFCC-DO), and heavy aromatic oil. In a preferred specific embodiment of the present invention, the petroleum-based raw material may include pyrolysis fuel oil.

In a specific embodiment of the present invention, the petroleum-based raw material may include aromatic compounds in an amount of 10 to 90 wt%. Preferably, the petroleum-based raw material may include aromatic compounds in an amount of 20 to 80 wt%, and more preferably 30 to 70 wt%. When the content of aromatic compounds in the petroleum-based raw material satisfies the above range, a porous carbon support having controlled pore properties may be obtained even when a solid pitch pellet, which will be described below, is stabilized, carbonized, and activated without separately pulverizing the solid pitch pellet.

In a specific embodiment of the present invention, the aromatic compound may be a compound having 1 to 4 aromatic rings. Specifically, the aromatic compound may include at least one selected from the group consisting of substituted or unsubstituted benzene, naphthalene, phenanthrene, indene, biphenyl, anthracene, tetralin, and fluorene. In this case, a porous carbon support having controlled pore properties may be obtained even when the solid pitch pellet, which will be described below, is stabilized, carbonized, and activated without separately pulverizing the solid pitch pellet.

In a specific embodiment of the present invention, pyrolysis and polycondensation of the petroleum-based raw material may be performed at a temperature of 350 to 500°C. In a preferred specific embodiment of the present invention, pyrolysis and polycondensation of the petroleum-based raw material may be performed at a temperature of 400 to 500°C. In a more preferred specific embodiment of the present invention, pyrolysis and polycondensation of the petroleum-based raw material may be performed at a temperature of 430 to 470°C. When the pyrolysis and polycondensation temperature of the petroleum-based raw material is 350 to 500°C, pitch containing a relatively large amount of low-molecular-weight components may be produced, and, in the activation process of step (5), which will be described below, components having relatively low molecular weights may be vaporized first, thereby sufficiently forming mesopores in the carbon support. If the pyrolysis and polycondensation temperature of the petroleum-based raw material is less than 350°C, it is difficult to produce pitch that is solid at room temperature, and if the temperature exceeds 500°C, pitch contains a relatively large amount of high-molecular-weight components, making it difficult to produce a carbon support having mesopores.

In a specific embodiment of the present invention, pyrolysis and polycondensation of the petroleum-based raw material may be performed under an atmosphere of an oxidizing gas, an inert gas, or a mixed gas thereof. In a preferred specific embodiment of the present invention, the oxidizing gas may be oxygen, ozone, or a combination thereof, the inert gas may be nitrogen, helium, neon, argon, or a combination thereof, and the mixed gas may be air, but the present invention is not particularly limited thereto.

When an oxidizing gas is used during pyrolysis and polycondensation of the petroleum-based raw material, pitch having a high softening point may be produced, but it is difficult to perform pyrolysis and polycondensation at a high temperature. When an inert gas is used during pyrolysis and polycondensation of the petroleum-based raw material, pyrolysis and polycondensation may be performed at a high temperature, but it is difficult to produce pitch having a relatively high softening point. When a mixed gas of an oxidizing gas and an inert gas is used during pyrolysis and polycondensation of the petroleum-based raw material, pyrolysis and polycondensation may be performed at a relatively high temperature to produce pitch having a relatively high softening point.

In a specific embodiment of the present invention, during pyrolysis and polycondensation of the petroleum-based raw material, the above gas may be supplied at a flow rate of 10 to 800 mL/min. In a preferred specific embodiment of the present invention, during pyrolysis and polycondensation of the petroleum-based raw material, the above gas may be supplied at a flow rate of 100 to 500 mL/min. When the flow rate of the above gas is less than 10 mL/min, the yield of pitch increases, but the amount of low-molecular-weight components becomes excessive, which is disadvantageous for a subsequent process such as stabilization. When the flow rate of the above gas exceeds 800 mL/min, the yield of pitch may decrease.

In a specific embodiment of the present invention, pyrolysis and polycondensation of the petroleum-based raw material may be performed for 1 to 10 hours. In a preferred specific embodiment of the present invention, pyrolysis and polycondensation of the petroleum-based raw material may be performed for 2 to 8 hours. In a more preferred specific embodiment of the present invention, pyrolysis and polycondensation of the petroleum-based raw material may be performed for 2 to 7 hours. When the pyrolysis and polycondensation time of the petroleum-based raw material is less than 1 hour, it is difficult to produce pitch having a high softening point, and when the pyrolysis and polycondensation time exceeds 10 hours, quinoline-insoluble components may be excessively generated.

In a specific embodiment of the present invention, pyrolysis and polycondensation of the petroleum-based raw material may be performed under stirring. The stirring conditions for the petroleum-based raw material are not particularly limited, but, for example, a stirrer rotating at 10 to 500 rpm may be used.

In a specific embodiment of the present invention, the pitch synthesized in step (1) may have a softening point of 200 to 350°C. In a preferred specific embodiment of the present invention, the pitch may have a softening point of 200 to 330°C. In a more preferred embodiment of the present invention, the pitch may have a softening point of 200 to 300°C. Since the pitch produced according to the present invention has a high softening point, when it is used as a precursor for producing a carbon support, the stabilization process is easy, and a high yield may be obtained after carbonization and activation.

In a specific embodiment of the present invention, the yield of the pitch synthesized in step (1) may be 10 to 50 wt%. In a preferred specific embodiment of the present invention, the yield of the pitch may be 10 to 40 wt%. In a more preferred specific embodiment of the present invention, the yield of the pitch may be 20 to 30 wt%.

In a specific embodiment of the present invention, before step (1), a pretreatment step of pretreating the petroleum-based raw material may be performed. By removing low-boiling-point components contained in the petroleum-based raw material through the pretreatment step, pitch having a higher softening point may be produced.

In a specific embodiment of the present invention, the pretreatment step may be performed at a temperature equal to or lower than the temperature for pyrolysis and polycondensation of the petroleum-based raw material in step (1), but the present invention is not particularly limited to this condition. Specifically, the pretreatment step may be performed at 250 to 450°C, preferably at 250 to 400°C, and more preferably at 300 to 400°C.

In a specific embodiment of the present invention, the pretreatment step may be performed for a time equal to or shorter than the time for pyrolysis and polycondensation of the petroleum-based raw material in step (1), but the present invention is not particularly limited to this condition. Specifically, the pretreatment step may be performed for 1 to 8 hours, preferably for 1 to 6 hours, and more preferably for 1 to 5 hours.

In addition, in step (2), the pitch may be solidified and pelletized to obtain pelletized pitch, or the pitch may be solidified, pelletized, and pulverized to obtain powdered pitch.

First, in the case of pelletized pitch, the pitch (liquid) obtained in step (1) is solidified, for example, by extrusion and cooling, and pelletized to a desired size to obtain solid pitch pellets (pelletized pitch). The process of obtaining solid pitch pellets by extruding, cooling, and pelletizing the liquid pitch may be performed using a commercialized apparatus. For example, this process may be performed using a double-belt cooler & flaker manufactured by IPCO, but the present invention is not particularly limited to this apparatus.

The pitch pellets (pelletized pitch) obtained in step (2) have an average particle size of 1 to 30 mm, preferably 5 to 25 mm. When the average particle size of the pitch pellets (pelletized pitch) is within this range, the porous carbon support may be produced through stabilization, carbonization, and activation, which will be described below, without separately pulverizing the pitch pellets (pelletized pitch).

In addition, in the case of powdered pitch, the pitch pellets (pelletized pitch) may be further crushed or pulverized and classified. The pitch pellets (pelletized pitch) may be further micronized through crushing or pulverization, and the particle size distribution of the pitch pellets (pelletized pitch) may be made uniform through classification. Here, the classification may be performed by dry classification, wet classification, or classification using a sieve. Through crushing or pulverization and classification, powdered pitch having an average particle diameter of 50 to 500 µm may be obtained.

In step (3), a step of stabilizing the pelletized pitch or the powdered pitch may be performed.

First, the pelletized pitch or powdered pitch obtained in step (2) is primarily oxidized to stabilize the carbon structure of the pitch.

In a specific embodiment of the present invention, the stabilization may be performed under an oxidizing gas atmosphere. In a preferred specific embodiment of the present invention, the stabilization may be performed under an air atmosphere, but the present invention is not particularly limited thereto.

In a specific embodiment of the present invention, the stabilization may be performed at a temperature of 100 to 500°C, preferably 150 to 300°C. When the stabilization is performed at this temperature, the carbon structure in the pelletized pitch or powdered pitch is changed from thermoplastic to thermosetting, so that the structure may be stably maintained in the subsequent carbonization process. In this case, the heating rate may be 2 to 10°C/min. If the heating rate is too slow, productivity may be poor, whereas if the heating rate is excessively fast, it may be difficult to achieve uniform stabilization treatment.

In a specific embodiment of the present invention, the stabilization may be performed at a pressure of 0.1 to 10 bar, preferably 0.5 to 5 bar. When the stabilization is performed at this pressure, the structure of even the carbon inside the pelletized pitch or powdered pitch may be sufficiently stabilized.

In a specific embodiment of the present invention, the stabilization may be performed under a flow rate condition of 0.1 to 500 mL/min, preferably 1 to 300 mL/min, of an oxidizing gas, preferably air. When the stabilization is performed under this oxidizing-gas flow rate condition, the structure of even the carbon inside the pelletized pitch or powdered pitch may be sufficiently stabilized.

In a specific embodiment of the present invention, the stabilization may be performed for 1 to 10 hours, preferably 2 to 8 hours. When the stabilization is performed for this period of time, the structure of even the carbon inside the pelletized pitch or powdered pitch may be sufficiently stabilized.

In step (4), the stabilized pitch is carbonized to obtain a carbonized product. Through carbonization of the stabilized pitch, other functional groups included in the pitch are removed, and a carbonized product substantially composed of pure carbon may be obtained.

In a specific embodiment of the present invention, the carbonization may be performed under an inert gas atmosphere. In a preferred specific embodiment of the present invention, the carbonization may be performed under a nitrogen or argon atmosphere, but the present invention is not particularly limited thereto.

In a specific embodiment of the present invention, the carbonization may be performed at a temperature of more than 700°C and 1,000°C or less, preferably 800 to 900°C. If the temperature during the carbonization is lower than this range, carbonization may not be sufficiently performed, and if the temperature during the carbonization is higher than this range, the carbonization yield may decrease.

In a specific embodiment of the present invention, the carbonization may be performed under a flow rate condition of 0.1 to 30 mL/min, preferably 0.1 to 10 mL/min, of an inert gas, preferably nitrogen. When the carbonization is performed under this inert-gas flow rate condition, the stabilized pitch may be sufficiently carbonized.

In a specific embodiment of the present invention, the carbonization may be performed for 0.5 to 5 hours, preferably 1 to 3 hours. When the carbonization is performed for this period of time, the stabilized pitch may be sufficiently carbonized.

In step (5), the carbonized product is activated to obtain a porous carbon support. Through activation of the carbonized product, pores are formed in the carbonized product, thereby making it possible to obtain the porous carbon support.

In a specific embodiment of the present invention, activation of the carbonized product may be performed under an oxidizing gas atmosphere. In a preferred specific embodiment of the present invention, activation of the carbonized product may be performed under a steam atmosphere, but the present invention is not particularly limited thereto.

In a specific embodiment of the present invention, activation of the carbonized product may be performed at a temperature of more than 700°C and 1,000°C or less, preferably 800 to 900°C. When activation of the carbonized product is performed at this temperature, a porous carbon support in which micropores and mesopores are sufficiently formed may be obtained.

In a specific embodiment of the present invention, activation of the carbonized product may be performed at a pressure of 0.1 to 10 bar, preferably 0.1 to 5 bar. When activation of the carbonized product is performed at this pressure, a porous carbon support in which micropores and mesopores are sufficiently formed may be obtained.

In a specific embodiment of the present invention, activation of the carbonized product may be performed under a flow rate condition of 0.1 to 100 mL/min, preferably 0.1 to 50 mL/min, of an oxidizing gas, preferably steam. When activation of the carbonized product is performed under this oxidizing-gas flow rate condition, a porous carbon support in which micropores and mesopores are sufficiently formed may be obtained.

In a specific embodiment of the present invention, activation of the carbonized product may be performed for 0.5 to 5 hours, preferably 1 to 3 hours. When activation of the carbonized product is performed for this period of time, a porous carbon support in which micropores and mesopores are sufficiently formed may be obtained.

In a specific embodiment of the present invention, the stabilization, carbonization, and activation of steps (3) to (5) may each be performed in a heating furnace using microwaves. In a preferred specific embodiment of the present invention, all of the stabilization, carbonization, and activation of steps (3) to (5) may be performed in a heating furnace using microwaves. A heating furnace using microwaves is preferable because the temperature of the pitch itself may be increased without increasing the external temperature of the pitch, but the present invention is not particularly limited thereto.

In a specific embodiment of the present invention, steps (3) to (5) may be continuously performed in one apparatus. In a preferred specific embodiment of the present invention, steps (3) to (5) may be continuously performed in one rotary kiln, but the present invention is not particularly limited to this apparatus. Since steps (3) to (5) are continuously performed in one apparatus, optimization of the process may be achieved.

In a specific embodiment of the present invention, the porous carbon support obtained in step (5) may be further crushed or pulverized and classified. The porous carbon support may be further micronized through crushing or pulverization, and the particle size distribution of the porous carbon support may be made uniform through classification. Here, the classification may be performed by dry classification, wet classification, or classification using a sieve. Through crushing or pulverization and classification, a porous carbon support powder having an average particle size of 1 to 20 µm, a BET specific surface area of 300 to 3,000 m²/g, and a tap density of 0.05 to 0.5 g/mL may be obtained. In addition, the porous carbon support powder has a mesopore volume ratio of 5 to 80%, based on the total pore volume, wherein the mesopores have a pore size of 2 to 50 nm.

Meanwhile, when the pelletized pitch is stabilized, carbonized, and activated without additionally pulverizing the pitch in step (2) to obtain a porous carbon support, the carbon support may be pulverized (or additionally classified) so as to have an average particle size of 1 to 20 µm, but the present invention is not limited thereto.

Next, a silicon/carbon composite matrix is formed on the surface of and inside the pores of the porous carbon support to produce a carbon-silicon/carbon composite.

In this case, formation of the silicon/carbon composite matrix may be performed using an apparatus known in the art to which the present invention pertains (for example, a rotary kiln) and a method known in the art (for example, chemical vapor deposition (CVD)). Specifically, the silicon/carbon composite matrix may be formed on the surface of and inside the pores of the porous carbon support by performing composite CVD in which CVD is performed by simultaneously supplying a silicon source and a carbon source to the porous carbon support.

In a specific embodiment of the present invention, the silicon source may include at least one selected from silane (SiH₄), dichlorosilane (SiH₂Cl₂), silicon tetrafluoride (SiF₄), silicon tetrachloride (SiCl₄), methylsilane (CH₃SiH₃), and disilane (Si₂H₆), but the present invention is not particularly limited thereto.

In addition, the carbon source may include at least one selected from the group consisting of methane, ethane, propane, butane, methanol, ethanol, propanol, propanediol, butanediol, ethylene, propylene, butylene, butadiene, cyclopentene, acetylene, benzene, toluene, xylene, ethylbenzene, naphthalene, anthracene, and dibutylhydroxytoluene, but the present invention is not particularly limited thereto.

In addition, the composite CVD may be performed at a temperature of 300 to 600°C, preferably 450 to 550°C. In addition, the composite CVD may be performed at atmospheric pressure and, if necessary, may also be performed under a low vacuum of about 10 Torr. In addition, in the composite CVD, based on a charged batch amount of 10 g to 100 g, the silicon source may be supplied at a charging flow rate of 100 sccm to 1000 sccm, and the silicon source and the carbon source may be supplied at a weight ratio of 1:0.1 to 1:2, preferably 1:0.15 to 1:1.9.

If the weight ratio of the silicon source to the carbon source exceeds 1:2 (silicon source less than 1, carbon source greater than 2), a relatively large amount of SiCx may be formed, thereby decreasing electrical capacity and deteriorating cycle characteristics, and if the weight ratio is less than 1:0.1 (silicon source greater than 1, carbon source less than 0.1), a relatively small amount of SiCx is formed and a relatively large amount of Si may be formed, and thus problems caused by volume expansion of silicon during charging and discharging cannot be resolved, thereby causing structural damage to the negative electrode material.

### Negative Electrode Active Material

According to another embodiment of the present invention, there is provided a negative electrode active material including a carbon-silicon/carbon composite.

The negative electrode active material according to an embodiment of the present invention may include a carbon-silicon/carbon composite.

In addition, the negative electrode active material according to an embodiment of the present invention may further include, in addition to the carbon-silicon/carbon composite, a carbon-based negative electrode material, specifically, a graphite-based negative electrode material. For example, the negative electrode active material may be obtained by mixing the carbon-silicon/carbon composite according to an embodiment of the present invention with a carbon-based negative electrode material, for example, a graphite-based negative electrode material.

Here, the carbon-based negative electrode material may include, for example, at least one selected from the group consisting of natural graphite, artificial graphite, soft carbon, hard carbon, mesocarbon, carbon fiber, carbon nanotube, pyrolytic carbons, cokes, calcined organic polymer compound, and carbon black, but is not particularly limited thereto.

The content of the carbon-based negative electrode material in the negative electrode active material according to an embodiment of the present invention may be 2 to 80 wt%, preferably 5 to 70 wt%, and more preferably 30 to 70 wt%, based on the total weight of the negative electrode active material.

The negative electrode active material according to an embodiment of the present invention may be effectively used for producing a negative electrode of a secondary battery, specifically, a negative electrode of a lithium secondary battery and a negative electrode of an all-solid-state battery.

### All-Solid-State Battery

According to another embodiment of the present invention, there is provided an all-solid-state battery including an SEI (Solid Electrolyte Interphase) layer including a carbon-silicon/carbon composite.

The all-solid-state battery may be an all-solid-state battery including a positive electrode, a negative electrode, and a solid electrolyte between the positive electrode and the negative electrode, and the negative electrode may include a negative electrode active material layer, wherein at least a portion of the negative electrode active material particles in the negative electrode active material layer may include an SEI (Solid Electrolyte Interphase) layer including the above-described carbon-silicon/carbon composite.

Meanwhile, the negative electrode active material particles may be a carbon-based negative electrode material. In this case, since the content may be the same as that described above with respect to the negative electrode active material, a related description thereof will be omitted.

In addition, in addition to the negative electrode active material particles and the SEI layer of the all-solid-state battery, the negative electrode configuration, the positive electrode configuration, and the solid electrolyte configuration may adopt known configurations of an all-solid-state battery, and thus are not particularly limited in the present invention.

### MODE FOR CARRYING OUT THE INVENTION

### Examples

Hereinafter, the present invention will be described in more detail by way of Examples. The following Examples are merely illustrative of the present invention, and the scope of the present invention is not limited thereto.

### <Example 1>

300 g of petroleum-based residual oil (YNCC, HTC PFO (pyrolysis fuel oil)) was charged into a reactor equipped with a stirrer, and pyrolysis and polycondensation were performed at 450°C for 3 hours while supplying nitrogen at a flow rate of 100 mL/min. At this time, the stirrer was rotated at a speed of 200 rpm to mix the reactants (step (1)). The polymerized pitch was solidified and pelletized to obtain solid pitch pellets having an average particle size of 1 to 30 mm.

The solid pitch pellets obtained above were pulverized to prepare pitch particles having an average particle size of 200 µm (step (2)), and then introduced into a rotary kiln having three zones to sequentially perform stabilization (step (3)), carbonization (step (4)), and activation (step (5)). The conditions for the stabilization, carbonization, and activation are shown in Table 1 below.

The specific surface area of the carbon support was measured using Belsorp mini II in accordance with ASTM D4820-93. The tap density of the carbon support was measured using a tap density analyzer (Electrolab, ETD-1020x) in accordance with ASTM B527. The average particle size of the carbon support was measured using a particle size analyzer (Horiba, laser particle analyzer, LA-960V2) in accordance with ASTM E112. The results are shown in Table 1.

**[Table 1]**

| Step | Condition | Reference Example |
|---|---|---|
| Stabilization | Temperature (°C) | 300 |
| | Time (hr) | 3 |
| | Atmosphere | Air |
| Carbonization | Temperature (°C) | 900 |
| | Time (hr) | 1 |
| | Atmosphere | Nitrogen |
| Activation | Temperature (°C) | 900 |
| | Time (hr) | 3 |
| | Steam Flow Rate (mL/min) | 200 |
| Support Properties | Average Particle Size (µm) | 200 |
| | Specific Surface Area (m²/g) | 1409.1 |
| | Tap Density (g/mL) | 0.44 |

The porous carbon support of Reference Example was pulverized using a pulverizer (Netzsch, air jet mill) to obtain a fine powder of a porous carbon support having an average particle size of 7 µm. Subsequently, 15 g of the fine powder of the porous carbon support was charged into rotating CVD equipment, heated to a temperature of 475°C under an inert atmosphere (N₂), and then subjected to composite CVD for 1 hour at a gas flow rate of SiH₄:C₂H₄ = 450 sccm:144 sccm (a gas flow rate ratio of the silicon source to the carbon source of 1:0.32), thereby forming a silicon/carbon composite matrix on the surface of and inside the pores of the porous carbon support to produce a carbon-silicon/carbon composite.

### <Example 2>

A carbon-silicon/carbon composite was produced in the same manner as in Example 1, except that the gas flow rate of SiH₄:C₂H₄ = 450 sccm:144 sccm was changed to a gas flow rate of SiH₄:C₂H₄ = 450 sccm:108 sccm (a gas flow rate ratio of the silicon source to the carbon source of 1:0.24).

### <Example 3>

A carbon-silicon/carbon composite was produced in the same manner as in Example 1, except that the gas flow rate of SiH₄:C₂H₄ = 450 sccm:144 sccm was changed to a gas flow rate of SiH₄:C₂H₄ = 150 sccm:450 sccm (a gas flow rate ratio of the silicon source to the carbon source of 1:3).

### <Comparative Example>

A carbon-silicon/carbon composite was produced in the same manner as in Example 1, except that, instead of performing composite CVD, deposition was performed for 1 hour under conditions of an SiH₄ gas flow rate of 450 sccm and a temperature of 475°C, followed by deposition for 1 hour under conditions of a gas flow rate of C₂H₄:Ar = 100 sccm:900 sccm and a temperature of 700°C.

### <Experimental Example 1>

### (1) Scanning Electron Microscope (SEM) Analysis

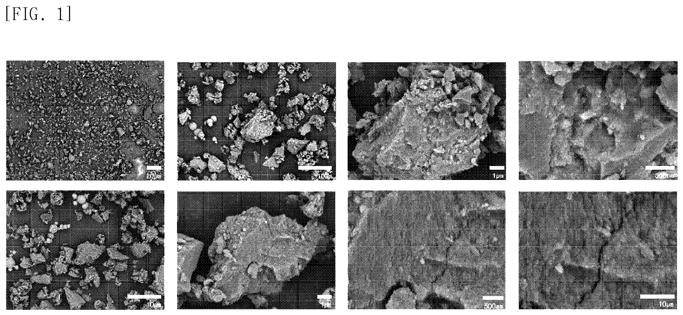

The carbon-silicon/carbon composite produced according to Example 1 was observed using a scanning electron microscope (SEM). The results of the SEM analysis are shown in FIG. 1.

As a result, as shown in FIG. 1, it was confirmed that a uniform silicon/carbon composite matrix was formed overall on the surface of and inside the pores of the porous carbon support.

### (2) Electrochemical Evaluation

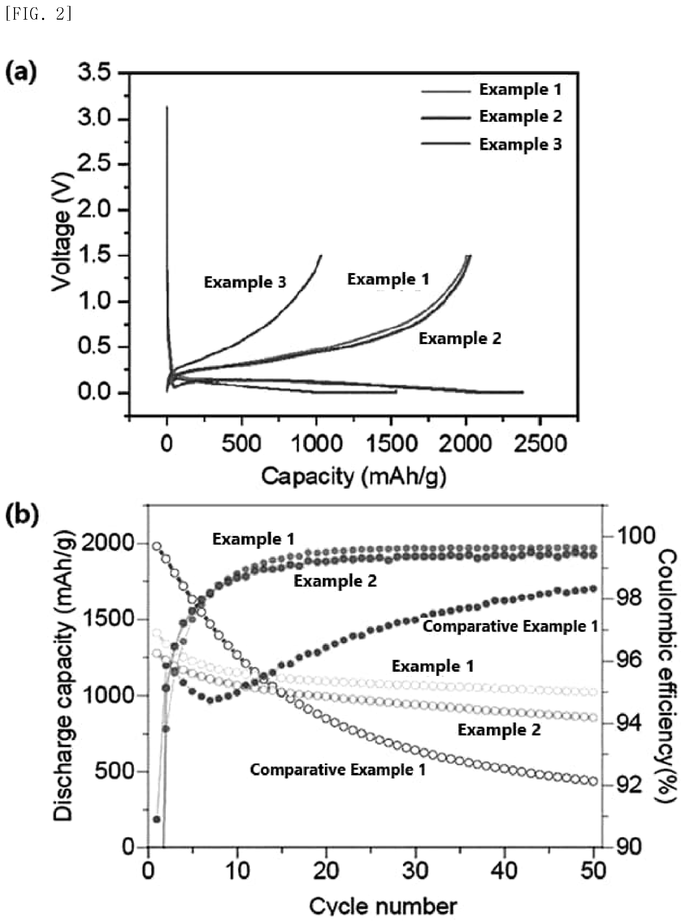

Half coin cells were respectively fabricated using the composites of Example 1, Example 2, Example 3, and Comparative Example, and electrochemical evaluation was performed. The half coin cell fabrication conditions are shown in Table 2, and the evaluation results are shown in Tables 3 and 4 and FIG. 2. In Table 2, AM, CM, and BM respectively denote an active material (carbon-silicon/carbon composite), a conductive material (Super P carbon black), and a binder (styrene-butadiene rubber/carboxymethyl cellulose, 5:5), and EC, EMC, DMC, FEC, VC, and PS respectively denote ethylene carbonate, ethyl methyl carbonate, dimethyl carbonate, fluoroethylene carbonate, vinylene carbonate, and propanesultone.

**[Table 2]**

| Composition (AM:CM:BM) | 8:1:1 |
|---|---|
| Areal Capacity (mAh/cm²) | 1 |
| Electrolyte | 1.3 M LiPF₆ EC/EMC/DMC 3:5:2, 10% FEC, 0.2% LiBF₄, 0.5% VC, 1% PS |
| Cut-Off Voltage (V) | Formation: 0.005-1.5, Cycle Test: 0.005-1.2 |
| C-Rate (C) | Formation: 0.1-0.1, CV cut-off at 0.005 V with 0.01C |

**[Table 3]**

| Sample | Charge Capacity (mAh/g) | Discharge Capacity (mAh/g) | ICE (%) |
|---|---|---|---|
| Example 1 | 2348 | 2007 | 85.5 |
| Example 2 | 2335 | 2024 | 86.7 |
| Example 3 | 1534 | 1031 | 67.2 |

**[Table 4]**

| Sample | Cycle Retention (%) |
|---|---|
| Example 1 | 72.4 |
| Example 2 | 66.8 |
| Comparative Example | 22.0 |

As can be confirmed from Tables 3 and 4 and FIG. 2, Examples 1 and 2 exhibited a reversible capacity of about 2000 mAh/g, and it can be seen that the peak near 0.45 V, which indicates the suSi phase, was remarkably low, and that a high CE of 99.6% or more was achieved after 25 cycles. In contrast, in the case of Example 3 (1:3), which exceeds the range of the gas flow rate ratio of the silicon source to the carbon source during composite CVD, it was confirmed that, since carbon is more dominant than silicon in the constitution of the silicon/carbon composite matrix, electrical capacity decreased and a low ICE was exhibited. It was also confirmed that, in Comparative Example, since silicon and carbon do not constitute a composite matrix in which they are bonded to each other, cycle retention was significantly reduced.

### (3) dQ/dV Measurement (Measurement Related to c-LiSi Phase)

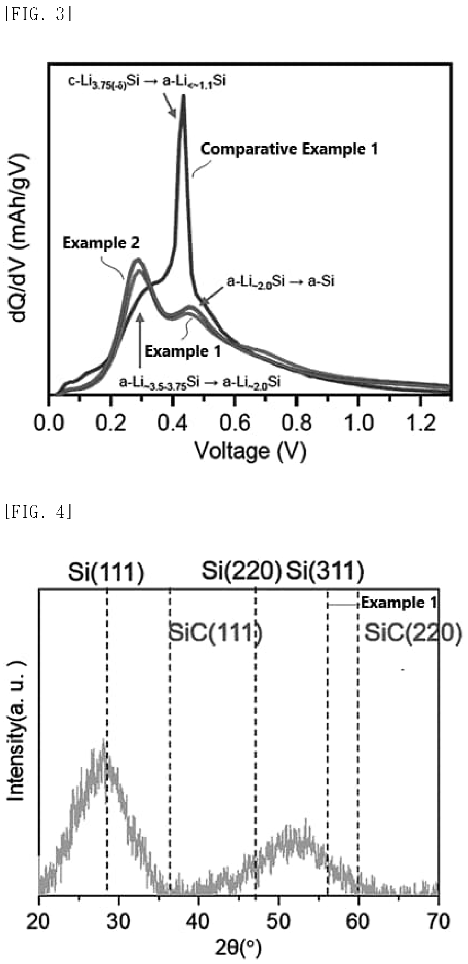

With respect to Example 1, Example 2, and Comparative Example 1, formation (CC-CV) is performed under conditions of 0.1C-0.1C and 0.005 V/0.01C cut-off (CV) using a C-rate calculated based on the Si loading amount of the negative electrode material and the like. Thereafter, dQ/dV (d(Q-Qo)/dE) is derived using the collected data. In the present invention, dQ/dV was calculated and derived through the Analysis Process of EC-Lab. The results are shown in FIG. 3.

As a result, the c/a peak ratio of Example 1 was derived as 0.66, the c/a peak ratio of Example 2 was derived as 0.64, and the c/a peak ratio of Comparative Example was derived as 2.72. It was confirmed that Examples 1 and 2 formed a smaller amount of the c-LiSi phase than Comparative Example 1, and accordingly, it was expected that stable electrochemical performance would be maintained during life evaluation.

### (4) XRD Analysis

With respect to the carbon-silicon/carbon composite according to Example 1, XRD analysis was performed under the following conditions. The results are shown in FIG. 4.
- Equipment: D-MAX 2200 (RIGAKU)
- Angle: 20-70°
- Sampling W.: 0.01
- X-Ray: 40kV/30 mA
- DivSlit: 1/2 deg.
- DivH.L.Slit: 10 mm
- SctSlit: 1/2 deg
- RecSlit : 0.15 mm

As a result, it was confirmed that the carbon-silicon/carbon composite according to Example 1 had no crystalline peak of Si and no SiC peak.

### <Examples 1-1 to 1-3>

The composite according to Example 1 was heat-treated at a temperature of 600°C (Example 1-1), 700°C (Example 1-2), and 900°C (Example 1-3), respectively.

### Experimental Example 2

### (1) XRD Analysis

XRD analysis was performed on the composites according to Example 1, Examples 1-1 to 1-3, and Comparative Example.

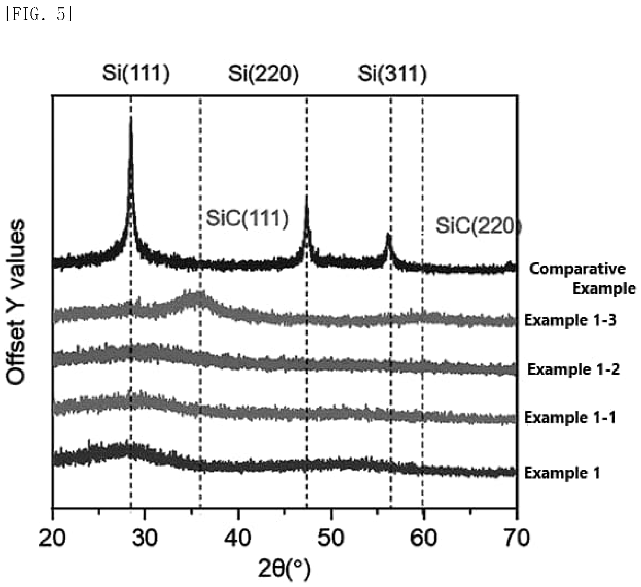

Specifically, XRD analysis was performed under the following conditions on the composite according to Example 1, the heat-treated composites according to Examples 1-1 to 1-3, and the composite of Comparative Example. The results are shown in FIG. 5.
- Equipment: D-MAX 2200 (RIGAKU)
- Angle: 20-70°
- Sampling W.: 0.01
- X-Ray: 40kV/30 mA
- DivSlit: 1/2 deg.
- DivH.L.Slit: 10 mm
- SctSlit: 1/2 deg.
- RecSlit : 0.15 mm

As a result, in the case of Comparative Example, a crystalline Si peak was clearly observed due to additional carbon coating at a temperature of 700°C, and it can be seen that, as described above, poor results were obtained in the life evaluation.

In addition, in the case of the heat-treated composites, no distinct Si peak or SiC peak was observed up to heat treatment at 700°C, and a broad amorphous peak was observed between 28° and 32°.

Further, upon heat treatment at 900°C, SiC(111), SiC(220), and Si(111) peaks were observed. At this time, calculation of crystallite sizes through the respective peaks yielded the following results.
- SiC(111): 1.1 nm
- SiC(220): 2.4 nm
- Si(111): 4.8 nm

From the above results, it can be confirmed that a silicon/carbon composite matrix was formed on the porous carbon support, and that the Si crystallite size was controlled thereby.

Although exemplary embodiments of the present invention have been described above, the spirit of the present invention is not limited to the embodiments presented herein. It will be understood by those skilled in the art that various other embodiments may be readily proposed within the scope of the same inventive concept by adding, modifying, deleting, or supplementing components, and such embodiments shall also fall within the scope of the present invention.

## Claims

1. A carbon-silicon/carbon composite, comprising:
a porous carbon support having a mesopore volume ratio of 5 to 80%, based on a total pore volume, wherein the mesopores have a pore size of 2 to 50 nm; and
a silicon/carbon composite matrix disposed on a surface of and inside pores of the porous carbon support.

2. The carbon-silicon/carbon composite of claim 1, wherein the porous carbon support has
a BET specific surface area of 300 to 3,000 m²/g,
a tap density of 0.05 to 0.5 g/mL, and
an average particle diameter of 1 to 20 µm.

3. The carbon-silicon/carbon composite of claim 1, wherein a content of silicon is 20 to 70 wt% based on a total weight of the carbon-silicon/carbon composite.

4. The carbon-silicon/carbon composite of claim 1, wherein the silicon/carbon composite matrix is present in an amount of 10 to 90 wt% based on a total weight of the carbon-silicon/carbon composite.

5. The carbon-silicon/carbon composite of claim 1, wherein an average size of silicon crystals in the silicon/carbon composite matrix is 10 nm or less.

6. The carbon-silicon/carbon composite of claim 1, wherein the carbon-silicon/carbon composite has a c/a peak ratio of 0 to 1.5.

7. A method for producing a carbon-silicon/carbon composite, the method comprising:
forming a silicon/carbon composite matrix on a surface of and inside pores of a porous carbon support to produce a carbon-silicon/carbon composite.

8. The method of claim 7, further comprising, before the producing of the carbon-silicon/carbon composite:
(1) synthesizing pitch by pyrolyzing and polycondensing a petroleum-based raw material;
(2) solidifying and pelletizing the pitch to obtain pelletized pitch, or solidifying, pelletizing, and pulverizing the pitch to obtain powdered pitch;
(3) stabilizing the pelletized pitch or the powdered pitch;
(4) carbonizing the stabilized pitch to obtain a carbonized product; and
(5) activating the carbonized product to obtain the porous carbon support.

9. The method of claim 7, wherein the silicon/carbon composite matrix is formed by performing composite CVD of a silicon source and a carbon source on the porous carbon support.

10. The method of claim 9, wherein a gas flow rate ratio of the silicon source to the carbon source is 1:0.1 to 1:2.

11. A negative electrode active material comprising the carbon-silicon/carbon composite according to any one of claims 1 to 6.

12. An all-solid-state battery comprising an SEI (Solid Electrolyte Interphase) layer including the carbon-silicon/carbon composite according to any one of claims 1 to 6.
